# EUROPÄISCHE PATENTANMELDUNG

(11) **EP 2 184 820 A2**
(43) Veröffentlichungstag der Anmeldung: **12.05.2010**
(21) Anmeldenummer: 09013022.0
(22) Anmeldetag: 15.10.2009
(51) Int. Cl.: H02G 3/06

(54) **Kupplungselement zur Verbindung zweier Kabelkanalabschnitte**

(30) Priorität: 05.11.2008 DE 202008014724 U
(71) Anmelder: Tehalit GmbH, 67716 Heltersberg (DE)
(72) Erfinder: Mattfeld, Christian, 66919 Schauerberg (DE)
(74) Vertreter: Patentanwälte Möll, Bitterich & Dr. Keller

(57) **Zusammenfassung**

Die Erfindung betrifft ein Kupplungselement zur Verbindung zweier Kabelkanalabschnitte, bestehend aus einem Seitenelement (10), einer an dem Seitenelement (10) ausgebildeten Kopfleiste (14), welche mit Deckelverschlussprofilen (2) eines Kanalunterteils (1) kooperiert, und einer an dem Seitenelement (10) ausgebildeten federnden Zunge (12). An dem Seitenelement (10) ist ein ein- und ausklappbarer Ausleger (20) angewinkelt.

## Beschreibung

Die Erfindung betrifft ein Kupplungselement zur Verbindung zweier Kabelkanalabschnitte gemäß dem Oberbegriff des Anspruchs 1 sowie Leitungsführungskanäle, die ein solches Kupplungselement umfassen.

Leitungsführungskanäle und Kabelträgersysteme werden am Montageort aus fabrikmäßig hergestellten Einzelelementen zusammengesetzt. Hierzu werden die Kabelkanalabschnitte mit begrenzter Länge, beispielsweise 2 m, geliefert. Der Monteur muss zur Montage eines Kabelkanals oder einer Leitungsführungsstrecke eine Vielzahl von solchen Kabelkanalabschnitten verlegen und miteinander verbinden. Damit die benachbarten Kabelkanalabschnitte an den Stoßstellen fluchten, werden spezielle Kupplungselemente eingesetzt.

Im Stand der Technik sind solche Kupplungselemente der Art nach bereits bekannt. Die GB-A 476 870 zeigt U-förmige Kupplungselemente, die an die Außenseite des Kanalunterteils geschweißt werden und das anstoßende Kanalelement umgreifen. Die Verwendung von innenliegenden, ebenfalls angeschweißten Kupplungselementen ist in der GB-A 717 629 beschrieben.

Die EP-B 753 917, die DE-U 295 10 836 und die DE-U 94 09 822 zeigen die Verwendung von Metallwinkeln zur Verstärkung von im Winkel verlegten Leitungsführungskanälen.

Die DE-U 85 28 466, die DE-C 36 33 604, die DE-U 84 10 740 und die DE-U 208 17 946 zeigen die Verwendung von Kupplungselementen aus Stahlblech, die zwischen dem Deckelverschlussprofil und dem Boden des ebenfalls aus Stahlblech hergestellten Kanalunterteils verklemmt werden, wobei durch scharfe Kanten und Spitzen gleichzeitig eine niederohmelektrische Verbindung für den vorgeschriebenen Potentialausgleich zwischen den benachbarten Kanalabschnitten hergestellt wird.

Die EP-A 1 061 623, die DE-U 295 00 130 und die EP-B 0 721 243 zeigen Kupplungselemente, die zwischen dem Deckelverschlussprofil und dem Boden des Kanalunterteils verklemmt werden, wobei auf der Innenseite des Kanalbodens parallel zu den Seitenwänden Längsleisten vorgesehen sind, die den Fuß der Kupplungselemente halten.

Gerade bei Metallkanälen, wie zum Beispiel Aluminiumkanälen, ist ein wirksamer Potentialausgleich zwischen den einzelnen Kabelkanalabschnitten unabdingbar. Viele der bekannten Kupplungselemente sind zur Verwendung in Metallkanälen nur bedingt geeignet und ermöglichen keinen zufriedenstellenden Potentialausgleich. Ferner tragen die meisten dieser Kupplungselemente nicht zur Stabilität oder Kaschierung der Stoßkanten der Kanalabschnitte eines Kanalunterteils bei.

Es ist vor diesem Hintergrund Aufgabe der vorliegenden Erfindung, ein Kupplungselement bereit zu stellen, das einerseits verrutschfest in ein Kanalunterteil montierbar ist und das andererseits die Kanalabschnitte an der Übergangsstelle kaschiert und stabilisiert. Ferner soll das Kupplungselement geeignet sein, für einen ausreichenden Potentialausgleich zwischen den Kabelkanalabschnitten bei Metallkanälen zu sorgen.

Diese Aufgabe wird gelöst durch ein Kupplungselement mit den Merkmalen des Anspruchs 1.

Bevorzugte Ausführungsformen finden sich in den Unteransprüchen wieder.

Das erfindungsgemäße Kupplungselement besteht aus einem Seitenelement sowie einem an diesem seitlich angewinkelten verstellbaren Ausleger. Der Ausleger kann in einem zusammengefalteten Zustand nach unten ausgeklappt oder gebogen werden. Die Stirnseite des Auslegers ist vorzugsweise L-förmig nach unten gebogen, um mit längs verlaufenden Profilleisten am Kanalunterteile zu kooperieren. Ferner befindet sich an dem Ausleger vorzugsweise eine Erdungsfahne zum Anbringen einer Leitung für den Potentialausgleich. Der Ausleger dient der Stabilisierung und Kaschierung der Stoßkanten an der Übergangsstelle der aufeinander stoßenden Kanalabschnitte.

Das Seitenelement besitzt eine vorzugsweise nach innen abgewinkelte Kopfleiste, die vorzugsweise an deren Spitze mit Zacken versehen ist. An der Kopfleiste befindet sich ferner vorzugsweise ein Schlitz, der die obere Hälfte des Seitenelements in zwei Hälften teilt. Je nach Montageposition kann der Monteur bei der Installation einen Abschnitt des Seitenelements gegenüber dem anderen nach innen oder außen verbiegen. Dadurch entsteht eine Stoßkante an der Stirnseite des äußeren Seitenelementabschnitts, die verhindert, dass das Kupplungselement beim Einschieben in den Kabelkanalabschnitt zu weit oder gar vollständig eingeschoben wird. Ferner soll verhindert werden, dass beim Aufschieben des zweiten Kabelkanalabschnitts auf das Kupplungselement dieses in den ersten Kabelkanalabschnitt verrutscht und damit die Verbindung und Kaschierung der Stoßstellen der Kabelkanalabschnitte gefährdet.

An der Fußseite des Seitenelements sind jeweils am Rand zwei nach außen abgewinkelte Krallen angeordnet. Die Krallen besitzen an der Oberseite Zacken, die zum Potentialausgleich beitragen. Beim Einschieben des Kupplungselements in einen Kabelkanalabschnitt sorgen sowohl die an der Kopfleiste als auch die an den Krallen ausgebildeten Zacken für den für einen Potentialausgleich notwendigen Kontakt mit dem Kabelkanalunterteil.

Die Erfindung beschreibt ferner ein Verfahren zur Verbindung zweier Kabelkanalabschnitte. Hierzu werden jeweils beidseitig eines Kabelkanalunterteils Kupplungselemente in die entsprechenden Führungsfurchen der Deckelverschlussprofile bzw. am Kanalboden in Längsrichtung verlaufende Profilleisten eingeschoben. Im Montagezustand sind die Ausleger zur Kanalmitte flügelartig abgewinkelt. Die durch den Schlitz getrennten Abschnitte der Seitenelemente werden leicht gegeneinander verbogen, um eine Stoßkante für die Stirnseite des aufzuschiebenden zweiten Kabelkanalabschnitts zu erzeugen. Schließlich werden in einem weiteren Schritt die Ausleger nach unten zum Kanalboden unter eine am Seitenrand des Seitenelements ausgebildete federnde Zunge gedrückt. Die Zunge sorgt dafür, dass die Ausleger ihre Position behalten und nicht nach oben zurückfedern können. Im montierten Zustand sind die beiden Ausleger auf den beiden Seiten des Kanalunterteils hintereinander angeordnet.

Die Erfindung wird in den nachfolgenden Zeichnungen näher erläutert. Es zeigen
- Fig. 1: verschiedene Darstellungen des erfindungsgemäßen Kupplungselements,
- Fig. 2: einen Leitungsführungskanal mit darin beidseitig eingeschobenen Kupplungselementen.

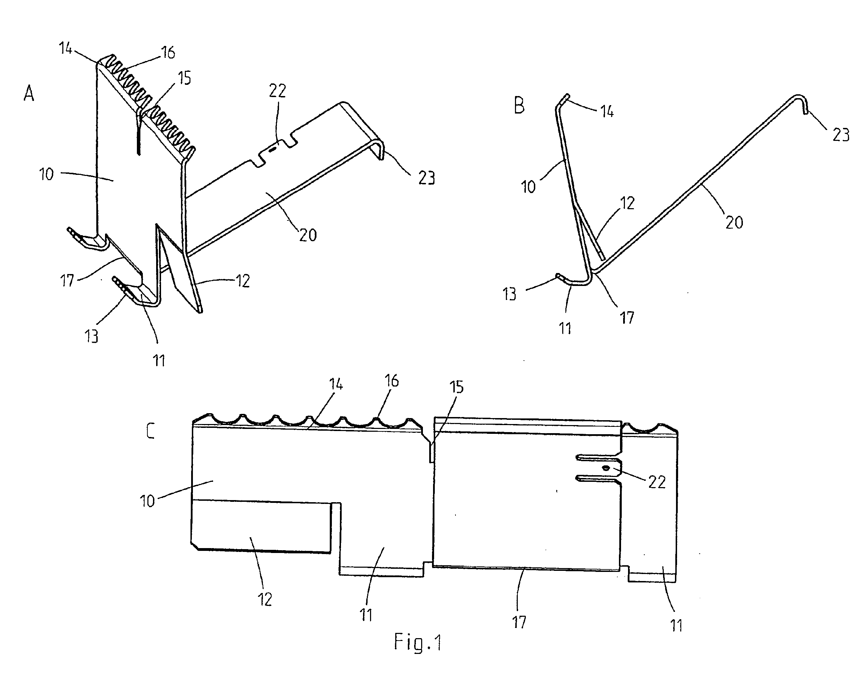

In Fig. 1 erkennt man eine Ausführungsform des erfindungsgemäßen Kupplungselements. Dieses besteht gemäß Fig. 1A aus einem Seitenelement 10 mit einer an der Kopfseite nach innen abgewinkelten Kopfleiste 14, welche Zacken 16 für den Potentialausgleich aufweist. Die obere Hälfte des Seitenelements 10 sowie der Kopfleiste 14 ist durch einen Schlitz 15 getrennt. Durch das Umbiegen einer Hälfte der so geteilten Seitenelementabschnitte wird eine Stoßkante erzeugt, die eine Verrutschsicherung des Kupplungselements beim Einführen in den Kabelkanalabschnitt oder beim Aufschieben des weiteren Kanalabschnitts darstellt.

An der Fußseite des Seitenelements 10 befinden sich zwei randständig nach außen abgewinkelte Krallen 11. Deren Spitze ist für einen wirksamen Potentialausgleich mit Zacken 13 versehen. Beim Einführen des Kupplungselements in den Kabelkanalabschnitt reiben sich die an der Kopfleiste 14 des Seitenelements 10 ausgebildeten Zacken 16 in das Metall des Kabelkanalunterteils 1.

Der Ausleger 20 ist an einem Seitenelement 10 entlang einer Knickstelle 17 angewinkelt. An dem Ausleger 20 befindet sich eine Erdungsfahne 22 für die Potentialausgleichsleitungen. Die Kopfseite des Auslegers 20 besitzt einen nach unten gebogenen Schenkel 23. Ferner erkennt man am äußeren Rand des Seitenelements 10 eine nach innen abgewinkelte federnde Zunge 12, welche sich im montierten Zustand des Kupplungselements gegen die Ausleger 20 abstützt.

In Fig. 1B ist das Kupplungselement in Frontalansicht gezeigt. Gut erkennt man die einzelnen Kupplungselementabschnitte wie das Seitenelement 10 mit Kopfleiste 14 und Kralle 11 sowie die aus dem Seitenelement 10 frei geschnittene federnde Zunge 12. Auch zu erkennen ist der entlang einer Knickstelle 17 angewinkeltem Ausleger 20 mit dessen abgewinkeltem Schenkel 23 an der Stirnseite.

In Fig. 1C ist schließlich eine Faltdarstellung des erfindungsgemäßen Kupplungselements gezeigt. In der gezeigten Ausführungsform wird das Kupplungselement aus einem Stück Blech hergestellt. Der Ausleger 20 ist nach oben gebogen.

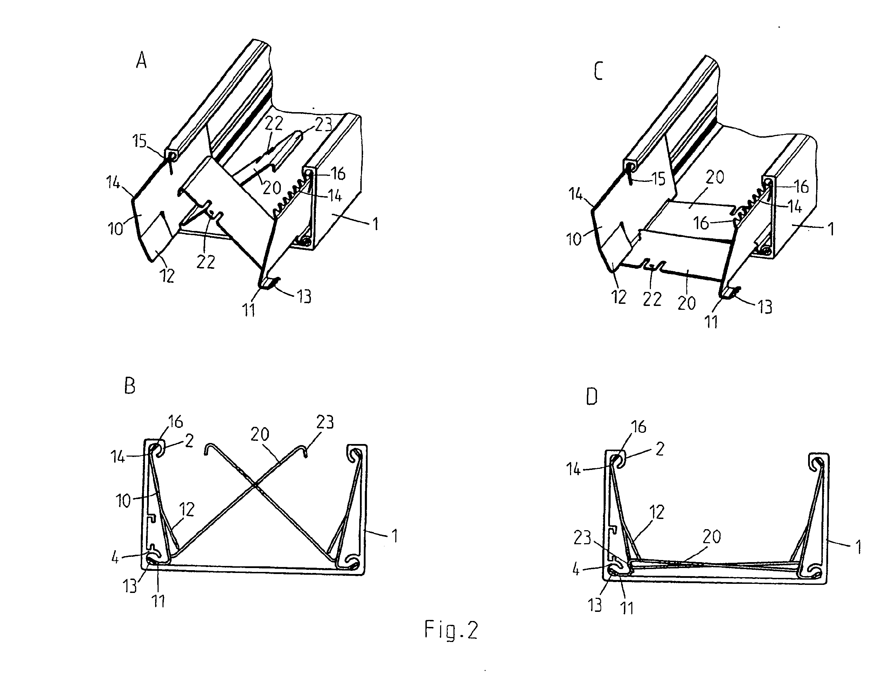

In Fig. 2 erkennt man schließlich das montierte Kupplungselement. An einem Kanalunterteil 1 wird, wie in Fig. 2A zu sehen, links- und rechtsseitig jeweils ein Kupplungselement in entsprechende Führungsprofile (Deckelverschlussprofil 2, Profilleiste 4) des Kanalunterteils 1 eingeführt. Die beiden Ausleger 20 sind nach oben angewinkelt. Beide Ausleger 20 sind hintereinander versetzt angeordnet.

In Fig. 2B erkennt man die Situation in Frontaldarstellung. Deutlich zu erkennen ist, dass die Kopfleiste 14 des Seitenelements 10 mit den Deckelverschlussprofilen 2 als Führungsfurche kooperiert. Am Kanalboden des Kanalunterteils 1 sind Profilleisten 4 ausgebildet, in welche die am Seitenelement 10 ausgebildeten Krallen 11 greifen und geführt werden.

In Fig. 2C erkennt man schließlich die endgültige Montageposition des Kupplungselements. Ein Abschnitt des Seitenelements 10 wird entlang des Schlitzes 15 gegenüber dem anderen Abschnitt verbogen, so dass an dem äußeren Abschnitt eine Stoßkante entsteht. Durch die Stoßkante wird verhindert, dass das Kupplungselement in das Kanalunterteil 1 verrutscht. Die beiden Ausleger 20 werden nach unten unter die federnde Zunge 12 gedrückt und von dieser gehalten. Dadurch wird ein Zurückfedern der Ausleger 10 nach oben zur Kanalmitte verhindert. An der Erdungsfahne 22 kann schließlich die notwendige Leitung für den Potentialausgleich angebracht werden.

In Fig. 2D ist die in Fig. 2C gezeigte Position in Frontalansicht dargestellt. Deutlich zu erkennen ist, wie sich die federnde Zunge 12 gegen den Ausleger 20 abstützt.

Durch den erfindungsgemäßen Aufbau des Kupplungselementes ist es mit einem einzigen Element möglich, Kabelkanalabschnitte miteinander zu verbinden und an der Übergangsstelle mit Hilfe der beiden am Kabelkanalboden aufliegenden Auslegern zusätzliche Stabilität und eine Kaschierung der Stoßstelle zu schaffen. Ferner befinden sich an ausgewählten Stellen die für den Potentialausgleich notwendigen Strukturen, die erfindungsgemäß an der Kopfleiste des Seitenelements und in Form von nach außen stehenden Krallen verwirklicht werden.

## Patentansprüche

1. Kupplungselement zur Verbindung zweier Kabelkanalabschnitte, bestehend aus
- einem Seitenelement (10),
- einer an dem Seitenelement (10) ausgebildeten Kopfleiste (14), welche mit Deckelverschlussprofilen (2) eines Kanalunterteils (1) kooperiert,
- einer an dem Seitenelement (10) ausgebildeten federnden Zunge (12), **gekennzeichnet durch** die Merkmale:
- an dem Seitenelement (10) ist ein Ausleger (20) angewinkelt,
- der Ausleger (20) ist ein- und ausklappbar.

2. Kupplungselement nach Anspruch 1, **gekennzeichnet durch** das Merkmal:
- die federnde Zunge (12) ist am Rand an der Fußseite des Seitenelements (10) frei geschnitten und zur Kanalmitte nach innen abgewinkelt.

3. Kupplungselement nach Anspruch 1 oder 2, **gekennzeichnet durch** das Merkmal:
- an der Fußseite des Seitenelements (10) befinden sich zwei randständige, nach außen abgewinkelte Krallen (11).

4. Kupplungselement nach Anspruch 3, **gekennzeichnet durch** das Merkmal:
- an der Spitze der Krallen (11) befinden sich Zacken (13).

5. Kupplungselement nach einem der vorhergehenden Ansprüche, **gekennzeichnet durch** die Merkmale:
- die Kopfleiste (14) ist zur Kabelkanalmitte abgewinkelt,
- an der Kopfleiste (14) sind Zacken (16) ausgebildet.

6. Kupplungselement nach Anspruch 5, **gekennzeichnet durch** das Merkmal:
- die Kopfseite des Seitenelements (10) und die Kopfleiste (14) werden **durch** einen Schlitz (15) geteilt.

7. Kupplungselement nach einem der vorhergehenden Ansprüche, **gekennzeichnet durch** das Merkmal:
- an dem Ausleger (20) befindet sich eine Erdungsfahne (22).

8. Kupplungselement nach einem der vorhergehenden Ansprüche, **gekennzeichnet durch** das Merkmal:
- das Kopfende des Auslegers (20) bildet einen L-förmig nach unten abgewinkelten Schenkel (23).

9. Kupplungselement nach einem der vorhergehenden Ansprüche, **gekennzeichnet durch** das Merkmal:
- das Kupplungselement ist vollständig aus einem Stück Blech hergestellt.

10. Leitungsführungskanal bestehend aus einem Kanalunterteil (1) und einem Deckel, umfassend ein Kupplungselement nach einem der Ansprüche 1 bis 9.

11. Leitungsführungskanal nach Anspruch 10, **gekennzeichnet durch** das Merkmal:
- an dem Kanalunterteil befinden sich jeweils links- und rechtsseitig ein Kupplungselement, wobei die Ausleger (20) hintereinander ausgeklappt sind.

12. Leitungsführungskanal nach einem der Ansprüche 10 oder 11, **gekennzeichnet durch** die Merkmale:
- die Kopfleiste (14) des Seitenelements (10) kooperiert mit dem Deckelverschlussprofil (2) des Kabelkanalunterteils (1),
- die Krallen (11) kooperieren mit den Fußprofilen (4) des Kabelkanalunterteils (1),
- die Ausleger (20) der Kupplungselemente sind je nach Montageposition entweder flügelartig angewinkelt oder parallel zum Kanalboden ausgeklappt.

13. Leitungsführungskanal nach einem der Ansprüche 10 bis 12, **gekennzeichnet durch** das Merkmal:
- bei dem Leitungsführungskanal handelt es sich um einen Metallkanal, vorzugsweise einen Aluminiumkanal.

14. Verfahren zur Verbindung zweier Kabelkanalabschnitte, bei dem jeweils beidseitig eines Kabelkanalunterteils ein Kupplungselement nach einem der Ansprüche 1 bis 9 in die entsprechenden Führungsfurchen der Deckelverschlussprofile bzw. am Kanalboden in Längsrichtung verlaufende Profilleisten eingeschoben wird.
